# EUROPEAN PATENT APPLICATION

(11) **EP 2 395 438 A1**
(43) Date of publication of application: **14.12.2011**
(21) Application number: 09839550.2
(22) Date of filing: 23.12.2009
(51) Int. Cl.: G06F 17/30

(54) **CHARACTER STRING PROCESSING METHOD AND SYSTEM AND MATCHER**

(30) Priority: 03.02.2009 CN 200910008578
(71) Applicant: Huawei Technologies Co., Ltd., Shenzhen, Guangdong 518129 (CN)
(72) Inventor: DONG, Zehao, Shenzhen Guangdong 518129 (CN); LIU, Xianjun, Shenzhen Guangdong 518129 (CN)
(74) Representative: Charles, Glyndwr
(86) International application number: PCT/CN2009/075902
(87) International publication number: WO 2010/088833

(57) **Abstract**

A character string processing method and system and a matcher are provided by embodiments of the present invention. The character string processing method includes the following steps. The matcher obtains a to-be-matched character string, which is converted by a manager, from an object library, and obtains a rule, which is set by a resource management device, from a rule library. The matcher parses a bit flag of a matching string of the rule, and when the parsed bit flag is an argument and the argument is in an argument library, adds a first offset to a parsed value of the argument to obtain a matching value. The matcher determines, according to the matching value of the bit flag of the matching string and an actual value of a corresponding bit of the to-be-matched character string, a matching result of the rule and the to-be-matched character string. By performing parsing, offset modification, and mask processing on each bit flag of the matching string of the rule, the character string processing method and system and the matcher reduce the number of the rules required to be used and the matching times, and improve the performance of the system.

## Description

### FIELD OF THE INVENTION

The present invention relates to the information processing technology, and in particular, to a character string processing method and system and a matcher.

### BACKGROUND OF THE INVENTION

With the rapid development of the information technology, various kinds of information, for example, various numbers, have been widely applied. Meanwhile, the numbers need to be graded based on different requirements. In different areas, grading rules of the numbers are different. Different fees may be collected or different services may be provided for the numbers of different grades. However, with the increase of the requirements, more and more classification and grading rules appear, and they become more and more complex. For example, China Telecom issues numbers of various types and grades, such as lucky numbers and personalized numbers, for the mobile number service. For another example, only two increasing digits exist in the last six digits of a number. Definitely, the requirement for number grading not only exists in the field of communication, but also exists widely in other fields, for example, QQ numbers, license plate numbers, and membership numbers.

Currently, various operation support systems use a number management module in a telecommunication business operation support system (Boss) to manage number-related services, and the number management module uses a corresponding character string exact matching system to process numbers with a large amount of data. The character string exact matching system supports setting and adaptation of various grades and rules of the numbers, and the system usually includes a matching rule configuration module, a matching rule parser, and a matching engine module. The matching rule configuration module usually uses a regular expression for matching, where a user predefines some regular expression rules to meet the requirements; then the matching engine module, according to the rules, performs matching by using the matching rule parser, and outputs a matching result. The system runs as follows: first, grades and types of rules are defined, and a rule is set for each grade and type of number, where the rule is usually a regular expression or a matching string; and then, the numbers are matched according to the rules.

However, in the implementation of the technical solution, the inventors find that the technical solution has the following defects. A large number of matching rules and matching times are required for matching some numbers by using the existing rules. For example, all possible rules such as "????1234" "????2345", "????3456", "????4567", and "????5678" need to be listed for an increasing or decreasing character string, and the more bits, the larger number of matching times. Furthermore, some numbers, for example, a number increasing by skipping over the same bit such as "???? 1516", or a number having only two increasing digits such as "????1222", cannot be matched by using the existing rules.

### SUMMARY OF THE INVENTION

A character string processing method and system and a matcher are provided by embodiments of the present invention, so as to reduce the number of required rules and matching times in a character string matching process.

An embodiment of the present invention provides a character string processing method, and the method includes:
obtaining, by a matcher, a to-be-matched character string, which is converted by a manager, from an object library, and obtaining a rule, which is set by a resource management device, from a rule library;
parsing, by the matcher, a bit flag of a matching string of the rule, and when the parsed bit flag is an argument and the argument is in an argument library, adding a first offset to a parsed value of the argument to obtain a matching value; and
by the matcher, determining, according to the matching value of the bit flag of the matching string and an actual value of a corresponding bit of the to-be-matched character string, a matching result of the rule and the to-be-matched character string.

An embodiment of the present invention provides a matcher, and the matcher includes:
a parsing module, adapted to parse each bit flag of a matching string of a rule;
a modification module, adapted to perform first offset modification on an argument obtained by parsing, so as to obtain a matching value; and a determining unit, adapted to determine, according to the matching value of the bit flag of the matching string and an actual value of a corresponding bit of the to-be-matched character string, a matching result of the rule and a to-be-matched character string.

An embodiment of the present invention provides a character string processing system, and the system includes:
a resource management device, adapted to set a matching rule, and store the matching rule in a rule library;
a manager, adapted to receive a to-be-matched character string from the resource management device, perform format conversion on the to-be-matched character string, and store the converted character string in an object library; and a matcher, adapted to obtain the to-be-matched character string from the object library, and obtain the rule from the rule library; parse each bit flag of a matching string of the rule, when the parsed bit flag is an argument and the argument is in an argument library, add a first offset to a parsed value of the argument, and determine, according to a matching value of the bit flag of the matching string and an actual value of a corresponding bit of the to-be-matched character string, a matching result of the rule and the to-be-matched character string; and store the matching result in the object library, and further provide the matching result to the manager and the resource management device.

According to the character string processing method and system and the matcher mentioned above, each bit flag of the matching string of the rule is parsed and offset modification and mask processing on the argument obtained by parsing are performed, thereby greatly reducing the number of the rules required to be used and the matching times, and improving the performance of the system.

### BRIEF DESCRIPTION OF THE DRAWINGS

To illustrate the technical solutions according to the embodiments of the present invention or in the prior art more clearly, the accompanying drawings for describing the embodiments of the present invention or the prior art are introduced briefly in the following. The accompanying drawings in the following description are just some embodiments of the present invention, and persons of ordinary skill in the art can derive other drawings from the accompanying drawings without creative efforts.
FIG 1 is a flow chart of a character string processing method according to Embodiment 1 of the present invention;
FIGs. 2A and 2B are a flow chart of a character string processing method according to Embodiment 2 of the present invention;
FIG 3 is a schematic structural view of a matcher according to an embodiment of the present invention;
FIG. 4 is a schematic structural view of a character string processing system according to an embodiment of the present invention; and
FIG. 5 is a signaling flow chart of a character string processing method according to an embodiment of the present invention.

### DETAILED DESCRIPTION OF THE EMBODIMENTS

Technical solutions of the present invention are further described in detail with reference to accompanying drawings and embodiments in the following.

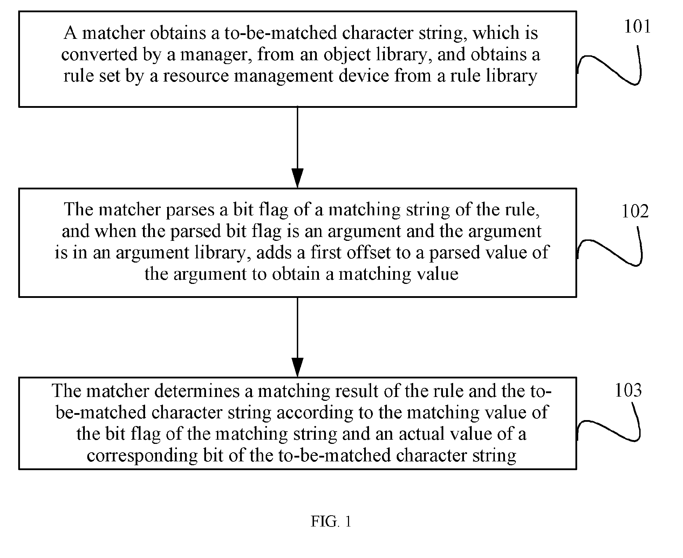

FIG. 1 is a flow chart of a character string processing method according to Embodiment 1 of the present invention. As shown in FIG. 1, the method includes the following steps.

In step 101, a matcher obtains a to-be-matched character string, which is converted by a manager, from an object library, and obtains a rule, which is set by a resource management device, from a rule library.

The resource management device in a Boss system sets a matching rule, and stores the matching rule in the rule library. The manager in the Boss system performs format conversion on a to-be-matched character string and stores the converted character string in the object library. The matcher obtains the to-be-matched character string from the object library, and obtains the rule from the rule library.

In step 102, the matcher parses a bit flag of a matching string of the rule, and when the parsed bit flag is an argument and the argument is in an argument library, adds a first offset to a parsed value of the argument to obtain a matching value.

The rule includes a rule grade and a rule classification. The rule grade is used for distinguishing priority in rule adaptation, and a rule of higher grade has priority to be matched in the case that multiple rules are satisfied at the same time. The rule classification may be used for distinguishing rules for matching different matching objects and different application scenarios.

Each rule includes a matching string, an offset string, and an argument library that are formed by defining each character. The bit flag may be a constant, a wildcard, or an argument. The bit flag is parsed, and if a constant is obtained by parsing the bit flag, the constant is directly compared with an actual value of the corresponding bit of the to-be-matched character string, so as to judge whether the matching is successful; if a wildcard is obtained by parsing, the current bit is matched successfully.

The performing the first offset modification on the argument obtained by parsing may include: judging whether the argument obtained by parsing exists in the argument library, and if the argument obtained by parsing exists in the argument library, adding the first offset to the parsed value of the argument to obtain the matching value; otherwise, storing in pairs the parsed value of the argument and a value, which is obtained by subtracting the first offset from the value of the corresponding bit of the to-be-matched number, in the argument library., and performing mask processing on the argument, upon which the first offset modification is performed, according to a mask rule.

Generally, the mask rule is an equation or inequation, the left side is the argument used in the bit flag, the right side is a mask value, and the mask value may be a constant or a mask argument. If the mask value is a constant, the mask value is compared with the argument; if the mask value is a mask argument, it is judged whether the mask argument exists in the argument library, and if the mask argument exists in the argument library, the value of the mask argument is extracted from the argument library to serve as the mask value, and the mask value is compared with the argument; if the mask argument does not exist in the argument library, the value of the argument is taken as the actual value of the mask argument, and is added to the argument library.

In step 103, the matcher determines, according to the matching value of the bit flag of the matching string and an actual value of a corresponding bit of the to-be-matched character string, a matching result of the rule and the to-be-matched character string.

The matcher compares the matching value of the bit flag of the matching string with the actual value of the corresponding bit of the to-be-matched character string so as to determine whether they are consistent, and if they are consistent, the bit of the to-be-matched character string corresponding to the matching value is matched successfully; otherwise, the matching is unsuccessful. If all bit flags of the matching string are successfully matched with the corresponding bits of the to-be-matched character string, the rule and the to-be-matched character string are matched successfully; otherwise, the rule is not applicable to the to-be-matched character string.

The character string processing method is: parsing each bit flag of the matching string of the rule, performing offset modification and mask processing on the argument obtained by parsing, so as to obtain the matching value, and finally comparing the matching value with the actual value of the to-be-matched character string to obtain the matching result. As a result, the number of rules required for matching the character string and the required matching times are greatly reduced, and the matching efficiency is improved.

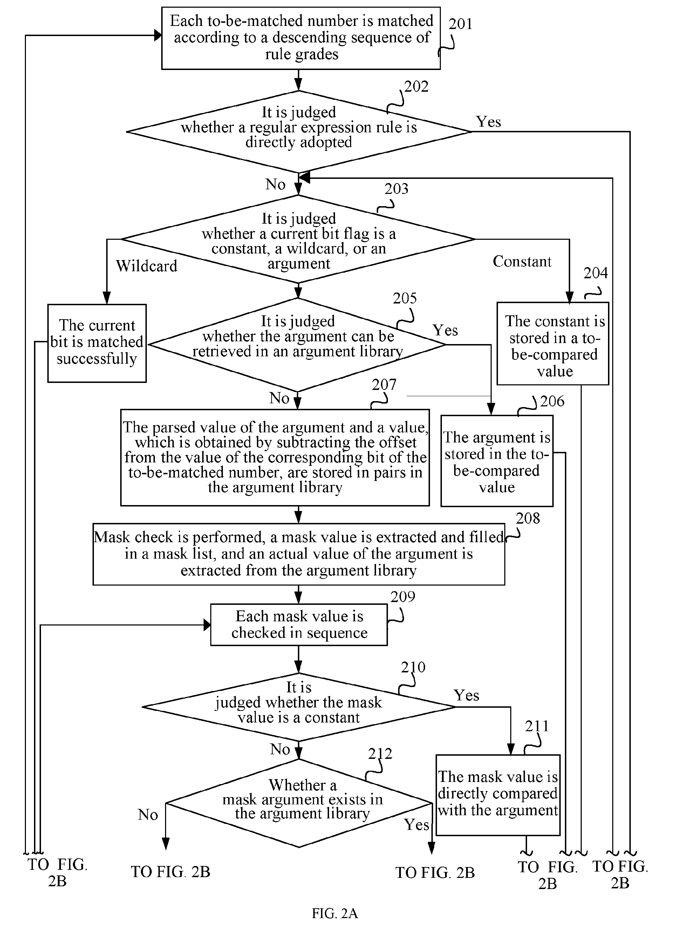

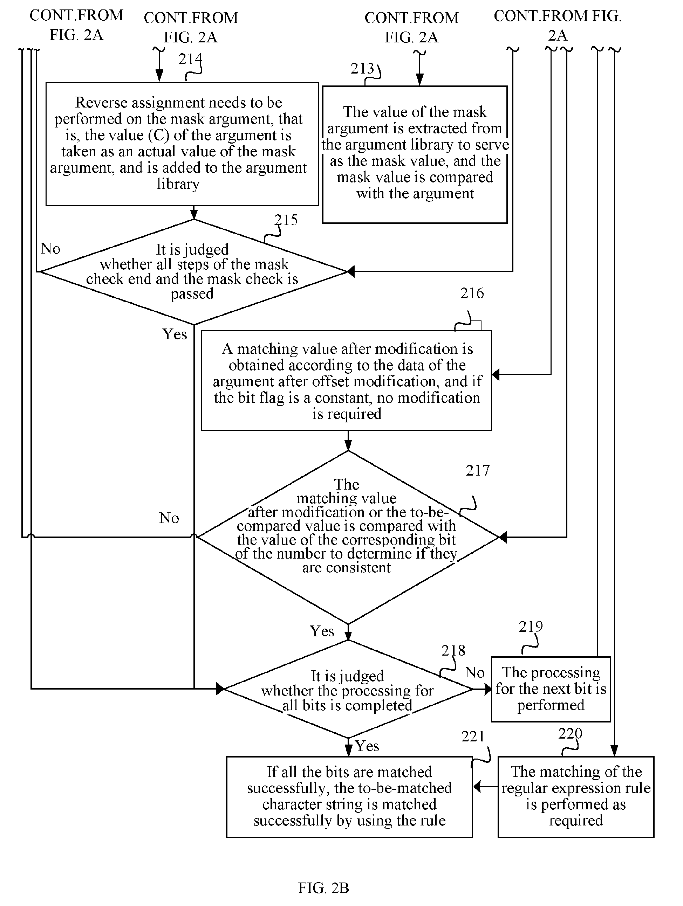

FIGs. 2A and 2B are a flow chart of a character string processing method according to Embodiment 2 of the present invention. As shown in FIGs. 2A and 2B, the method includes the following steps.

In step 201, each to-be-matched number is matched according to a descending sequence of rule grades.

In step 202, as for a current rule, it is judged whether a regular expression rule is directly adopted, and if a regular expression rule is directly adopted, step 220 is performed; otherwise, step 203 is performed.

In step 203, it is judged whether a current bit flag is a constant, a wildcard, or an argument, and if the current bit flag is a constant, step 204 is performed; if the current bit flag is a wildcard, the current bit is matched successfully, and step 218 is performed; if the current bit flag is an argument, step 205 is performed.

It is assumed that the number to be matched and the rule used for matching in this embodiment are as shown in Table 1.

**Table 1 Mapping table of number to be matched and rule used for matching**

| Number | 1 | 3 | 9 | 8 | 1 | 2 | 2 | 3 | 7 | 8 | 7 |
|---|---|---|---|---|---|---|---|---|---|---|---|
| Bit flag | * | * | * | 8 | A | A | B | B | C | D | E |
| Offset | None | None | None | None | None | 1 | None | 1 | None | None | None |
| Mask rule | A!=4; B=A+1; | | | | | | | | | | |
| | C=x,y; D=x,y; E=x,y | | | | | | | | | | |

The first to third bits are wildcards, the fourth bit is a constant, and the fifth to eleventh bits are arguments; an offset of the sixth and eighth bits is "1", other bits have no offset, that is, an offset of "0"; and the offset here is a first offset; and the mask rule is: A!=4; B=A+1; C=x,y (indicating x or y); D=x,y; E=x,y.

In step 204, the constant is stored in a to-be-compared value, and step 217 is performed.

The constant 8 is stored in the to-be-compared value to be compared, and the value is the same as the fourth bit of the to-be-matched character string, so the matching is passed.

In step 205, it is judged whether the argument can be retrieved in an argument library, and if the argument can be retrieved in an argument library, step 206 is performed; otherwise, step 207 is performed.

In step 206, the argument is stored in the to-be-compared value, and step 216 is performed.

As for the sixth bit and the eighth bit, since it is retrieved in the argument library that A=1 and B=2 are stored in the argument library, the argument is stored in the to-be-compared value.

In step 207, the parsed value of the argument and a value, which is obtained by subtracting the first offset from the value of the corresponding bit of the to-be-matched number, are stored in pairs in the argument library.

If the first offset does not exist, the value of the first offset is "0".

As for the fifth bit and the seventh bit, since the arguments A and B are not retrieved in the argument library, A=1 and B=2 are stored in the argument library.

In step 208, mask check is performed, a mask value is extracted and filled in a mask list, and an actual value of the argument is extracted from the argument library.

Generally, the mask rule is an equation or inequation, the left side is the argument used in the bit flag, the right side is the mask value, and the mask value may be a constant or a value range.

In step 209, each mask value is checked in sequence.

If the mask rule is a positive rule (for example, A=8, 9), the check results of the mask values have an OR relation, that is, the check is passed as long as one check result is tenable; if the mask rule is a negative rule (for example, A!= 4,5), the check results of the mask values have an AND relation, that is, the check is passed only if all the check results are tenable. If the check is passed, the check of the mask value ends, and the next mask rule is processed; and if the check fails, the rule does not match the number.

It is checked whether A, B, C, D, and E conform to the rule in the following.

In step 210, it is judged whether the mask value is a constant, and if the mask value is a constant, step 211 is performed; otherwise, step 212 is performed.

In step 211, the mask value is directly compared with the argument, and step 215 is performed.

A=1 matches A!=4, and B=2=A+1=1+1, so the matching is passed.

In step 212, it is judged whether a mask argument exists in the argument library, and if a mask argument exists in the argument library, step 213 is performed; otherwise, step 214 is performed.

In step 213, the value of the mask argument is extracted from the argument library to serve as the mask value, and the mask value is compared with the argument.

In step 214, reverse assignment needs to be performed on the mask argument, that is, the value (C) of the argument is taken as an actual value of the mask argument, and is added to the argument library.

In this way, during operation, the actual value of the argument and the actual value of the mask argument may be determined according to the number itself.

Neither x nor y is in the argument library, so C=7-> x=C=7 -> D=8 -> y=D=8 ->E=7 -> E=x, and the matching is passed.

It can be seen that the above steps may be adopted to implement matching of increasing character strings, for example, the fourth bit and the fifth bit, or the sixth bit and the seventh bit in this embodiment belong to an increasing character string. Similarly, the methods may be applicable to character strings with more bits. Definitely, the above steps may also be adopted to implement matching of decreasing character strings. Furthermore, reverse assignment of the argument supports repeated check between multiple bits, for example, the check of the eighth bit and the tenth bit in this embodiment.

Furthermore, if a second offset is set in the mask rule, for example, A=x, and the second offset is "1", offset modification is also performed on x in steps 213 and 214. That is, if the mask argument exists, such as x=6, the mask value of the argument needs to be modified as 6+1=7, that is, A is compared with 7; if the mask argument does not exist, reverse assignment is performed on the argument, but offset modification needs to be performed on the argument first, such as A=6, so x=6-1.

In step 215, it is judged whether all steps of the mask check end and the mask check is passed, and if all steps of the mask check end and the mask check is passed, step 218 is performed; otherwise, step 209 is performed.

In step 216, a matching value after modification is obtained according to the data of the argument after offset modification, and if the bit flag is a constant, no modification is required.

In the previous steps, the parsed value of the argument is already obtained, but the offset needs to be added to the parsed value, so as to obtain the final value of the bit for comparing with the actual number. The offset may be positive or negative, and if no offset exists, the offset defaults to "0".

The sixth bit and the eighth bit are modified according to the offset, that is, A=1+1=2, B=2+1=3.

In step 217, the matching value after modification or the to-be-compared value obtained in step 204 is compared with the value of the corresponding bit of the number to determine whether they are consistent, and if they are consistent, step 218 is performed; otherwise, the number is not applicable to the rule, and step 201 is performed.

Step 201 is performed with the purpose of performing matching for the next rule.

In step 218, it is judged whether all bits are processed completely, and if all bits are not processed completely, step 219 is performed; otherwise, step 221 is performed.

In step 219, the next bit is processed, and step 203 is performed.

In step 220, the matching of the regular expression rule is performed as required.

In order to be compatible with a general character string processing method, a common regular expression rule may be directly adopted for matching.

In step 221, if all the bits are matched successfully, the to-be-matched character string is matched successfully by using the rule.

The character string processing method above mentioned is: parsing each bit flag of the matching string of the rule, performing offset modification and mask processing on the argument obtained by parsing, so as to obtain the matching value, and finally comparing the matching value with the actual value of the to-be-matched character string to obtain the matching result. As a result, the matching times are greatly reduced and the matching efficiency of the character string is improved. Especially, the number of the matching rules of the increasing or decreasing character strings and the matching times are reduced by using the argument and the offset. Meanwhile, the argument is set for the bit flag and the mask, and dynamic parsing and reverse assignment of the argument are adopted during operation, and therefore the repeated check between multiple bits is supported.

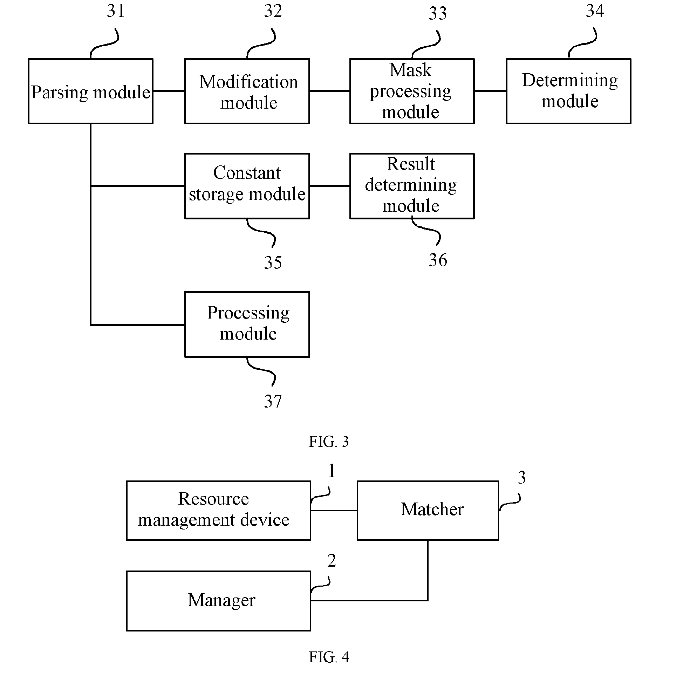

FIG. 3 is a schematic structural view of a matcher according to an embodiment of the present invention. As shown in FIG. 3, the matcher includes: a parsing module 31, adapted to parse each bit flag of a matching string of a rule; a modification module 32, adapted to perform first offset modification on an argument obtained by parsing, so as to obtain a matching value; and a determining module 34, adapted to determine, according to the matching value of the bit flag of the matching string and an actual value of a corresponding bit of the to-be-matched character string, a matching result of the rule and a to-be-matched character string.

In order to match a constant obtained by parsing the bit flag, the matcher may further include: a constant storage module 35, adapted to store the constant, which is obtained by parsing of the parsing module 31, in a to-be-compared value; and a result determining module 36, adapted to determine the matching result of the rule and the to-be-matched character string according to the to-be-compared value and the actual value of the corresponding bit of the to-be-matched character string. In order to match a wildcard obtained by parsing the bit flag, the matcher may further include a processing module 37 adapted to judge whether a regular expression rule is adopted if the bit flag parsed by the parsing module is a wildcard, and if the bit flag parsed by the parsing module is a wildcard, directly adopt the regular expression rule; otherwise, repeatedly parse each bit flag of the matching string of the rule.

Furthermore, in order to modify the argument obtained by parsing, the modification module may include: a judging unit, adapted to judge whether the argument obtained by parsing exists in an argument library; an obtaining unit, adapted to add a first offset to a parsed value of the argument to obtain a matching value when the argument obtained by parsing is stored in the argument library; and a storage unit, adapted to store in pairs the parsed value of the argument and a value, which is obtained by subtracting the first offset from the value of the corresponding bit of the to-be-matched number, in the argument library when the argument obtained by parsing is not stored in the argument library. In addition, the matcher may further include a mask processing module 33 adapted to perform mask processing on the argument, upon which the first offset modification is performed, according to a mask rule when the argument obtained by parsing is not stored in the argument library. In order to perform mask processing on the modified argument, the mask rule includes an argument and a mask value. The mask processing module may include: a constant processing unit, adapted to compare the mask value with the argument if the mask value is a constant; and an argument processing unit, adapted to judge whether a mask argument exists in the argument library if the mask value is the mask argument, and if a mask argument exists in the argument library, extract a value of the mask argument from the argument library to serve as the mask value and compare the mask value with the argument; if a mask argument does not exist in the argument library, take the value of the argument as an actual value of the mask argument, and add the value to the argument library.

Furthermore, a second offset may also be set in the mask rule. The constant processing unit may be adapted to modify the mask value according to the second offset, and compare the modified mask value with the argument. The argument processing unit may also modify the value of the argument according to the second offset to obtain the matching value, and take the matching value as the actual value of the mask argument.

According to the matcher mentioned above, each bit flag of the matching string of the rule is parsed by the parsing module, offset modification on the argument obtained by parsing is performed by the modification module, and mask processing is performed by the mask processing module to obtain the matching value, and finally the matching value is compared with the actual value of the to-be-matched character string to obtain the matching result. As a result, the number of the rules used for matching is reduced, the matching times are reduced, and the matching efficiency of the character string is improved. Especially, the number of the matching rules of the increasing or decreasing character strings and the matching times are reduced by using the argument and the offset. Meanwhile, the argument is set for the bit flag and the mask, and dynamic parsing and reverse assignment of the argument are adopted during operation, and therefore the repeated check between multiple bits is supported.

FIG 4 is a schematic structural view of a character string processing system according to an embodiment of the present invention. As shown in FIG. 4, the system includes: a resource management device 1, adapted to set a matching rule, and store the matching rule in a rule library; a manager 2, adapted to receive a to-be-matched character string from the resource management device 1, perform format conversion on the to-be-matched character string, and store the converted character string in an object library; and a matcher 3, adapted to obtain the to-be-matched character string from the object library, and obtain the rule from the rule library, parse each bit flag of a matching string of the rule, when the parsed bit flag is an argument and the argument is in an argument library, add a first offset to a parsed value of the argument, determine, according to the matching value of the bit flag of the matching string and an actual value of a corresponding bit of the to-be-matched character string, a matching result of the rule and the to-be-matched character string, and store the matching result in the object library, and further provide the matching result to the manager 2 and the resource management device 1.

The character string processing system provides encapsulation for external interfaces of the whole system through an intermediate layer adapter, so as to be compatible with various interface manners and batch interfaces, and provides a function of defining extended matching rules. The resource management device sets matching rules and stores the matching rules in the rule library.

The manager provides a function of defining and managing rules, and provides management and control on the matching process. The rule definition uses the argument, offset, and mask to abstract a large number of to-be-matched rules as rule representation and integrates the configuration of regular expressions, for customization by a user as required. The rule includes a classification and a grade. Various to-be-matched obj ects are converted into a uniform format and stored in the object library. Then, the matcher is triggered to execute the task, and a result is returned after the execution of the task is completed. The rule library is adapted to store the matching rules, and the object library is adapted to store the to-be-matched objects and the matching result. The matcher may load a corresponding rule according to a requirement and grade which are variable each time, and matches the to-be-matched object in the object library. In the matching process, the matcher may dynamically parse the regular expression and the rule which introduce the argument, so as to satisfy the requirements for configuring complex rules. Moreover, the specific structure of the matcher is the same as the structure of the matcher in the embodiment of the present invention, and will not be described in detail herein again.

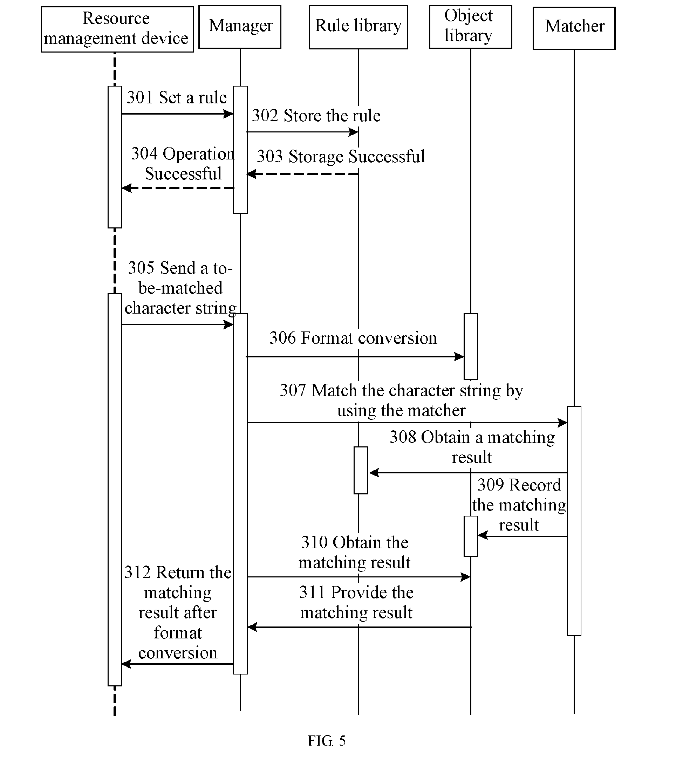

FIG. 5 is a signaling flow chart of a character string processing method according to an embodiment of the present invention. For example, the process for the system to perform character string processing is as shown in FIG. 5, and the process includes the following steps.

In step 301, a resource management device sets a rule and sends the rule to a manager.

In step 302, the manager stores the rule in a rule library.

In step 303, the rule library returns Storage Successful to the manager.

In step 304, the manager returns Operation Successful to the resource management device.

In step 305, the resource management device sends a to-be-matched character string to the manager.

In step 306, the manager performs format conversion on a to-be-matched number, and stores the converted number in an object library.

In step 307, the manager matches the character string by using the matcher.

In step 308, the matcher obtains a matching rule from the rule library, and performs parsing, offset processing, and mask processing to obtain a matching result.

In step 309, the matching result is recorded in the object library.

In step 310, the manager obtains the matching result from the object library.

In step 311, the object library provides the matching result to the manager.

In step 312, the manager returns the matching result after format conversion to the resource management device.

According to the character string matching system, through the interaction between the resource management device, the manager, and the matcher, each bit flag of the matching string of the rule is parsed, offset modification and mask processing on the argument obtained by parsing are performed to obtain the matching value, and finally the matching value is compared with the actual value of the to-be-matched character string to obtain the matching result. As a result, the number of the rules used for matching and the matching times are greatly reduced, and the matching speed and matching efficiency of the character string are improved. Especially, the number of the matching rules of the increasing or decreasing character strings and the matching times are reduced by using the argument and the offset. Meanwhile, the argument is set for the bit flag and the mask, and dynamic parsing and reverse assignment of the argument are adopted during operation, and therefore the repeated check between multiple bits is supported. Furthermore, the system can not only set the regular expression with the argument, but also use a general regular expression rule, so as to have good compatibility.

Finally, it should be noted that the above embodiments are merely provided for describing the technical solutions of the present invention, but not intended to limit the protection scope of the present invention. It should be understood by persons of ordinary skill in the art that although the present invention has been described in detail with reference to the exemplary embodiments, modifications or equivalent replacements can be made to the technical solutions of the present invention without departing from the spirit and scope of the present invention.

## Claims

1. A character string processing method, **characterized by** comprising:
obtaining, by a matcher, a to-be-matched character string, which is converted by a manager, from an object library, and obtaining a rule, which is set by a resource management device, from a rule library;
parsing, by the matcher, a bit flag of a matching string of the rule, and when the parsed bit flag is an argument and the argument is in an argument library, adding a first offset to a parsed value of the argument to obtain a matching value; and
by the matcher, determining, according to the matching value of the bit flag of the matching string and an actual value of a corresponding bit of the to-be-matched character string, a matching result of the rule and the to-be-matched character string.

2. The character string processing method according to claim 1, wherein after the parsing, by the matcher, the bit flag of the matching string of the rule, the method further comprises:
storing a constant, which is obtained by parsing, in a to-be-compared value; and
determining the matching result of the rule and the to-be-matched character string according to the to-be-compared value and the actual value of the corresponding bit of the to-be-matched character string.

3. The character string processing method according to claim 1, wherein after the parsing, by the matcher, the bit flag of the matching string of the rule, the method further comprises:
indicating that the current bit is matched successfully if the parsed bit flag is a wildcard.

4. The character string processing method according to any one of claims 1 to 3, further comprising:
when the argument is not in the argument library, storing in pairs the parsed value of the argument and a value, which is obtained by subtracting the first offset from a value of a corresponding bit of a to-be-matched number, in the argument library, and performing mask processing on the argument, upon which first offset modification is performed, according to a mask rule.

5. The character string processing method according to claim 4, wherein the mask rule comprises the argument and a mask value, and the performing the mask processing on the argument, upon which the first offset modification is performed, according to the mask rule comprises:
if the mask value is a constant, comparing the mask value with the argument; and if the mask value is a mask argument, judging whether the mask argument exists in the argument library; and if the mask argument exists in the argument library, extracting a value of the mask argument from the argument library to serve as the mask value, and comparing the mask value with the argument, and if the mask argument does not exist in the argument library, taking the value of the argument as the actual value of the mask argument, and adding the value to the argument library.

6. The character string processing method according to claim 5, wherein a second offset is set in the mask rule, and the comparing the mask value with the argument comprises:
modifying the mask value according to the second offset, and comparing the modified mask value with the argument; and
the taking the value of the argument as the actual value of the mask argument comprises:
modifying the value of the argument according to the second offset to obtain the matching value, and taking the matching value as the actual value of the mask argument.

7. A matcher, **characterized by** comprising:
a parsing module, adapted to parse each bit flag of a matching string of a rule;
a modification module, adapted to perform first offset modification on an argument obtained by parsing, so as to obtain a matching value; and
a determining unit, adapted to determine, according to the matching value of the bit flag of the matching string and an actual value of a corresponding bit of the to-be-matched character string, a matching result of the rule and a to-be-matched character string.

8. The matcher according to claim 7, further comprising:
a constant storage module, adapted to store a constant, which is obtained after the parsing module performs parsing, in a to-be-compared value; and
a result determining module, adapted to determine the matching result of the rule and the to-be-matched character string according to the to-be-compared value and the actual value of the corresponding bit of the to-be-matched character string.

9. The matcher according to claim 8, further comprising:
a processing module, adapted to indicate that the current bit is matched successfully if the bit flag parsed by the parsing module is a wildcard.

10. The matcher according to any one of claims 7 to 9, wherein the modification module comprises:
a judging unit, adapted to judge whether the argument obtained by parsing exists in an argument library;
an obtaining unit, adapted to add the first offset to a parsed value of the argument to obtain the matching value when the argument obtained by parsing is stored in the argument library; and
a storage unit, adapted to store in pairs the parsed value of the argument and a value, which is obtained by subtracting the first offset from a value of a corresponding bit of a to-be-matched number, in the argument library in pairs when the argument obtained by parsing is not stored in the argument library.

11. The matcher according to claim 10, further comprising:
a mask processing module, adapted to perform mask processing on the argument, upon which the first offset modification is performed, according to a mask rule when the argument obtained by parsing is not stored in the argument library.

12. The matcher according to claim 11, wherein the mask rule comprises the argument and a mask value, and the mask processing module comprises:
a constant processing unit, adapted to compare the mask value with the argument if the mask value is a constant; and
an argument processing unit, adapted to judge whether a mask argument exists in the argument library if the mask value is the mask argument, and if a mask argument exists in the argument library, extract a value of the mask argument from the argument library to serve as the mask value and compare the mask value with the argument; and if a mask argument does not exist in the argument library, take the value of the argument as the actual value of the mask argument, and add the value to the argument library.

13. The matcher according to claim 12, wherein a second offset is set in the mask rule, the constant processing unit is adapted to modify the mask value according to the second offset, and compare the modified mask value with the argument; and the argument processing unit is adapted to modify the value of the argument according to the second offset to obtain the matching value, and take the matching value as the actual value of the mask argument.

14. A character string processing system, **characterized by** comprising:
a resource management device, adapted to set a matching rule, and store the matching rule in a rule library;
a manager, adapted to receive a to-be-matched character string from the resource management device, perform format conversion on the to-be-matched character string, and store the converted character string in an object library; and
a matcher, adapted to obtain the to-be-matched character string from the object library and obtain the rule from the rule library; parse each bit flag of a matching string of the rule, when the parsed bit flag is an argument and the argument is in an argument library, add a first offset to a parsed value of the argument, and determine a matching result of the rule and the to-be-matched character string according to a matching value of the bit flag of the matching string and an actual value of a corresponding bit of the to-be-matched character string; and store the matching result in the object library, and further provide the matching result to the manager and the resource management device.
